# EUROPEAN PATENT APPLICATION

(11) **EP 1 729 023 A2**
(43) Date of publication of application: **06.12.2006**
(21) Application number: 06252758.5
(22) Date of filing: 26.05.2006
(51) Int. Cl.: F16D 11/06

(54) **A clutch mechanism**

(30) Priority: 03.06.2005 CN 200510075712
(71) Applicant: Positec Power Tools (Suzhou) Co., Ltd., Suzhou 215006 (CN)
(72) Inventor: Chen, Cheng Zhong, Positec Power Tools, Suzhou 215006 (CN)
(74) Representative: Stuttard, Garry Philip

(57) **Abstract**

The present invention discloses a clutch mechanism (100) to adjust eccentricity in a power tool. The clutch mechanism (100) comprises an outer race (1) mounted radially on an annular main body (2) which is mounted on an eccentric shaft (3). At least one first connecting member (42) is disposed between the outer race (1) and the annular main body (2). At least one second connecting member (52) is disposed between the annular main body (2) and the eccentric shaft (3). The first connecting member (42) makes the outer race (1) and the annular main body (2) rotate relative to each other at one way. The second connecting member (52) makes the annular main body (2) and the eccentric shaft (3) rotate relative to each other at one way. The annular main body (2) has an axial projection (26) formed thereon to connect with an eccentric mechanism in the power tool. With this type of clutch mechanism, the adjusted eccentricity will not change during working and torque can be transferred stably.

## Description

The present invention relates to a clutch mechanism for use in a power tool.

EP-A-820838 discloses a clutch mechanism for use in a power tool to adjust eccentricity. The clutch mechanism is used to connect a tool head with an eccentric sleeve. The eccentric sleeve can rotate relative to an eccentric fan wheel. A spring-loaded detent member is installed on the eccentric sleeve. A ring member is secured to the eccentric fan wheel and has at least two detent recesses formed thereon. To adjust eccentricity, the tool head is turned and the eccentric sleeve turns which makes the spring-loaded detent member engage different detent recesses on the ring member. Spring-loaded detent members and detent recess of this type are used generally in the art to transfer torque. However when the torque exceeds a certain level, the detent member slides out of the detent recess which causes the transfer to fail and the eccentricity to change thereby decreasing work efficiency.

The present invention seeks to improve clutch mechanisms for use in power tools to adjust eccentricity.

Thus viewed from a first aspect the present invention provides a clutch mechanism for adjusting eccentricity in a power toolcomprising:
an eccentric shaft driveable by a principle drive shaft;
an annular main body mounted radially on the eccentric shaft;
an outer race mounted radially on the annular main body;
at least one first connecting member disposed between the outer race and the annular main body such that when the principle drive shaft is locked the outer race and the annular main body are rotatable together in a common direction; and
at least one second connecting member disposed between the annular main body and the eccentric shaft such that when the principle drive shaft rotates the annular main body and the eccentric shaft are rotatable together in a common direction.

The clutch mechanism of the present invention makes adjusted eccentricity stable and can transfer power stably irrespective of whether torque increases or not. In particular, the clutch mechanism of the present invention permits eccentricity to be adjusted whilst remaining unchanged during use. Torque can be transferred stably and working efficiency is improved.

In a preferred embodiment, a first inclined wall is formed between the outer race and the annular main body and a second inclined wall is formed between the annular main body and the eccentric shaft, wherein the first connecting member is a first roller movable along the first inclined wall and the second connecting member is a second roller movable along the second inclined wall,

Preferably the annular main body has an outer circumferential wall and an inner circumferential wall and wherein the first inclined wall is formed on the outer circumferential wall and the second inclined wall is formed on the inner circumferential wall. Particularly preferably the inner circumferential wall has a plurality of first truncated conical recesses and the outer circumferential wall has a plurality of second truncated conical recesses, each first truncated conical recess having a wall which serves as the first inclined wall and each second truncated conical recess having a wall which serves as the second inclined wall. Particularly preferably each first and second truncated conical recess terminates in a narrow receiving bore. Preferably in each narrow receiving bore is disposed a loaded elastic member.

In a preferred embodiment, the annular main body has an axial projection formed on an end face which is cooperable with a corresponding recess on an eccentric mechanism.

In a preferred embodiment, the annular main body includes a base having at least one first securement member and a cover having at least one second securement member adapted to mate with the first securement member.

In a preferred embodiment, the eccentric shaft has a longitudinal bore for securely mounting the eccentric shaft radially on the principle drive shaft.

Preferably the annular main body has an inner circumferential wall and an outer circumferential wall, wherein the eccentric shaft has an outer wall and a longitudinal bore with a central axis A, wherein the central axis of the outer wall and the inner circumferential wall is Q and the central axis of the outer circumferential wall and the outer race is P, wherein the central axes A, P and Q are eccentric.

Preferably the annular main body has an inner circumferential wall having a plurality of first truncated conical recesses and an outer circumferential wall having a plurality of second truncated conical recesses, wherein in each first truncated conical recess is seated the second connecting member and in each second truncated conical recess is seated the first connecting member, wherein each of the first connecting member and second connecting member is an elastic element connected to a roller whereby the elastic element urges the roller outwardly.

Preferably when in use the principle drive shaft rotates, the rollers in the inner circumferential wall securely engage the principle drive shaft.

Preferably when in use the principle drive shaft rotates, the rollers in the outer circumferential wall disengage the outer race.

Preferably when in use the principle drive shaft is locked, the rollers in the outer circumferential wall engage the outer race.

Preferably when in use the principle drive shaft is locked, the central axis P rotates around the central axis Q whereby to adjust the eccentric stroke P relative to A.

A first sanding plate may be operably connected or coupled to the eccentric shaft. A coupling member (*eg* a coupling sleeve) may be radially mounted on the eccentric shaft and may carry a first sanding plate (*eg* an outer sanding plate). The central axis of the coupling member (and therefore the first sanding plate) is the central axis P. When the principle drive shaft of the power tool is locked (for example by a chuck), the outer race may be rotated causing the annular main body to rotate with the outer race such that the central axis P rotates around the central axis Q whereby to adjust the eccentric stroke (*ie* P relative to A) of the first sanding plate.

An eccentric mechanism of the power tool may be mounted on the principle drive shaft. An axial projection may be formed on one face of the cover for connecting the annular main body to an eccentric mechanism of the power tool. The eccentric mechanism may comprise a second eccentric shaft securely mounted radially on the principle drive shaft. A coupling member (*eg* a coupling sleeve) may be radially mounted on the second eccentric shaft and may carry a second sanding plate (eg an inner sanding plate). The central axis T of the coupling member (and therefore the second sanding plate) and central axis P may be symmetrically distributed around the central axis A. When the principle drive shaft of the power tool is locked (for example by a chuck), the outer race may be rotated causing the annular main body to rotate with the outer race such that the central axis T (rotates around the central axis Q whereby to adjust the eccentric stroke (*ie* T relative to A) of the second sanding plate.

Viewed from a further aspect the present invention provides a power tool comprising:
a housing;
a rotary motor in the housing;
a principle drive shaft driveable by the motor; and
a clutch mechanism as hereinbefore defined.

Preferably the power tool further comprises a first sanding plate connected or coupled to the eccentric shaft. Particularly preferably the power tool further comprises a second sanding plate connected or coupled to the second eccentric shaft.

The first sanding plate and second sanding plate may terminate at the base of housing. The first sanding plate and second sanding plate may be an outer sanding and an inner sanding plate. The or each sanding plate may be annular (*eg* stepped annular).

Preferably the power tool further comprises a principle drive shaft locking device. Particularly preferably the principle drive shaft locking device comprises:
a chuck mounted radially on the principle drive shaft, wherein the chuck has a skirt extending axially downwardly from its circumferential edge, wherein a plurality of recesses are located around the skirt; and
a locking member attached to the housing, wherein the locking member is selectively insertable into a recess to lock the chuck and prevent the principle drive shaft from rotating. More preferably the power tool further comprises: a balancing drum, wherein the chuck has a central aperture surrounded by an eccentric hub and the balancing drum is securely mounted on the eccentric hub.

A plurality of spaced apart location holes may be formed around the eccentric hub. The balancing drum may comprise a central aperture bound by a hub.

The annular main body may abut an end face of the balancing drum (*eg* the hub). The balancing drum may have a part radial recess extending from the hub. A spring and a ball head locating post connected to the spring may be disposed in the recess. The ball head locating post may be urged partly into a location hole on the eccentric hub to restrainedly couple the balancing drum and the chuck.

The annular main body may abut an end face of the chuck (*eg* the eccentric hub). The annular main body may have a radial recess. A spring and a ball head locating post connected to the spring may be disposed in the recess. The ball head locating post may be urged partly into a location hole on the eccentric hub to restrainedly couple the clutch and the chuck.

The first sanding plate may be mounted radially on the outer race. A support bearing may be substantially axially aligned with the outer race. The sanding plate may be radially mounted on the outer race and the bearing.

The present invention will now be described in a non-limitative sense with reference to the accompanying Figures in which:
FIGURE 1 is an exploded perspective view of an embodiment of the clutch mechanism according to the present invention;
FIGURE 2 is a longitudinal cross-sectional view of the clutch mechanism of FIGURE 1; and
FIGURE 3 is an axial cross-sectional view of the clutch mechanism of FIGURE 1.

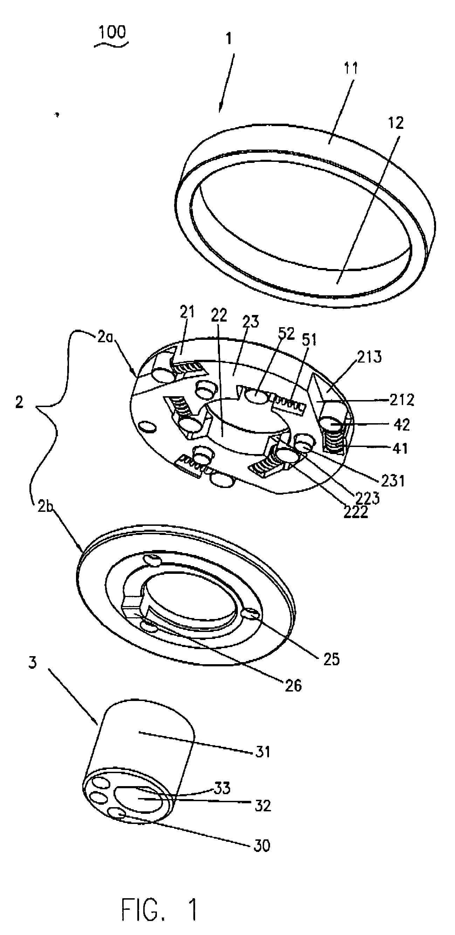

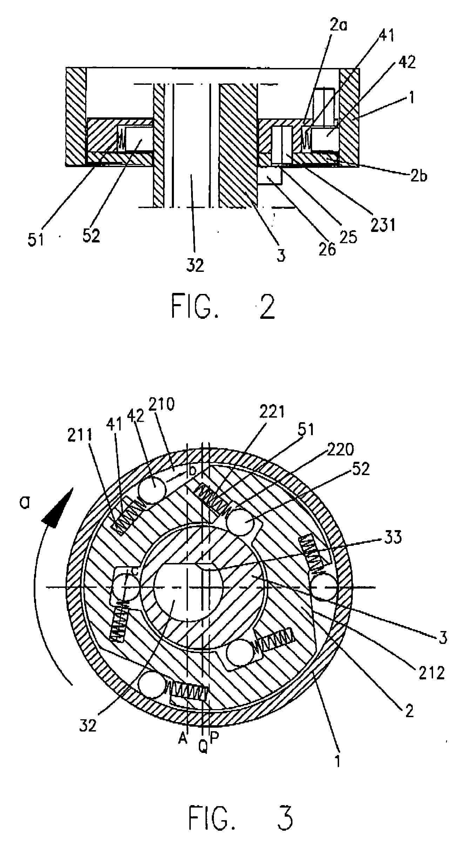

Figures 1 to 3 illustrate in isolation an embodiment of a clutch mechanism 100 of the present invention for adjusting eccentricity in a power tool. The clutch mechanism 100 comprises an annular main body 2 mounted radially on an upper part of an eccentric shaft 3. The annular main body 2 includes a base 2a and a cover 2b. The base 2a has an outer circumferential wall 21, an inner circumferential wall 22 with a central axis Q, a top face 23 and a bottom face. The axis of the outer circumferential wall 21 and the axis Q are eccentric with respect to each other. The base 2a has three axial locating pins 231 at intervals on the top surface 23. The cover 2b has three locating holes 25 formed at intervals. The three pins 231 engage the three holes 25 respectively. Formed on one face of the cover 2b is an axial projection 26 for connecting the clutch mechanism 100 to an eccentric mechanism of the power tool (not shown).

A ring-shaped outer race 1 has an outer wall 11 and an inner wall 12 and is mounted radially on the annular main body 2. The outer race 1 has a central axis P which is coincident with the central axis of the outer circumferential wall 21. On the outer race 1 is securely mounted radially a coupling arrangement (*eg* a coupling sleeve) for coupling the eccentric shaft 3 to a sanding plate (not shown). The central axis of the coupling arrangement (and therefore the sanding plate) is coincident with axis P.

There are three first truncated conical recesses 210 formed at 120° intervals on the outer circumferential wall 21 of the annular main body 2. Each of the first truncated conical recesses 210 has an inclined wall 212 and a retaining wall 213. Each first truncated conical recess 210 terminates in a narrow receiving bore 211. A loaded spring 41 is disposed in the narrow receiving bore 211 and is connected to an outer roller 42 seated in the truncated conical recess 210.

There are three second truncated conical recesses 220 formed at 120° intervals on the inner circumferential wall 22 of the annular main body 2. Each of the second truncated conical recesses 220 has an inclined wall 222 and a retaining wall 223. Each second truncated conical recess 220 terminates in a narrow receiving bore 221. A loaded spring 51 is disposed in the narrow receiving bore 221 and is connected to an inner roller 52 seated in the truncated conical recess 220.

The eccentric shaft 3 has three longitudinal off-axis bores 30 to reduce its weight and improve its balance. The eccentric shaft 3 has an outer wall 31 and a longitudinal bore 32 formed parallel to its central axis. The shape of the longitudinal bore 32 matches the shape of a principle drive shaft of the power tool (not shown) so that the eccentric shaft 3 can be securely mounted radially on the principle drive shaft. The longitudinal bore 32 has a linear portion 33 for engaging a linear portion of the principle drive shaft. The central axis of the outer wall 31 is the same as the central axis Q of the inner circumferential wall 22. The longitudinal bore 32 has a central axis A. The central axes A, Q and P are eccentric with respect to each other.

To assemble the clutch mechanism 100, the cover 2b is installed onto the base 2a by inserting the three pins 231 into the three holes 25. Secondly, the annular main body 2 is mounted radially on an upper part of the eccentric shaft 3. Each of the inner rollers 52 is disposed between the inclined wall 222 of the second truncated conical recess 220 and the outer wall 31 of the eccentric shaft 3. Finally, the outer race I is mounted radially on the annular main body 2. Each outer roller 42 is disposed between the first inclined wall 212 of the first truncated conical recess 210 and the inner wall 12 of the outer race 1. The first and second retaining walls 213, 223 prevent the outer and inner rollers 42, 52 falling out of the first and second truncated conical recesses 210, 220 respectively.

In use when the eccentric shaft 3 is driven by the principle drive shaft of the power tool, the spring 51 urges the inner roller 52 in an engagement direction shown by arrow c and the annular main body 2 rotates with the eccentric shaft 3 around the axis A in the direction of arrow a. In this circumstance, the clutch mechanism 100 serves as a power transferring mechanism. In use when the principle drive shaft of the power tool is locked (for example by a chuck), the outer race 1 may be rotated and the outer roller 42 is urged by the spring 41 in an engagement direction shown by arrow b. The friction between the outer roller 42 and the outer race 1 causes the annular main body 2 to rotate with the outer race 1. The central axis P rotates around the central axis Q whereby to adjust the eccentric stroke (*ie* P relative to A) of the sanding plate.

## Claims

1. A clutch mechanism (100) for adjusting eccentricity in a power tool comprising:
an eccentric shaft (3) driveable by a principle drive shaft;
an annular main body (2) mounted radially on the eccentric shaft (3);
an outer race (1) mounted radially on the annular main body (2);
at least one first connecting member (42) disposed between the outer race (1) and the annular main body (2) such that when the principle drive shaft is locked the outer race (1) and the annular main body (2) are rotatable together in a common direction; and
at least one second connecting member (52) disposed between the annular main body (2) and the eccentric shaft (3) such that when the principle drive shaft rotates the annular main body (2) and the eccentric shaft (3) are rotatable together in a common direction.

2. A clutch mechanism (100) as claimed in claim 1, wherein a first inclined wall (212) is formed between the outer race (1) and the annular main body (2) and a second inclined wall (222) is formed between the annular main body (2) and the eccentric shaft (3), wherein the first connecting member (42) is a first roller movable along the first inclined wall (212) and the second connecting member (52) is a second roller movable along the second inclined wall (222).

3. A clutch mechanism (100) as claimed in claim 1 or 2, wherein the annular main body (2) has an outer circumferential wall (21) and an inner circumferential wall (22) and wherein the first inclined wall (212) is formed on the outer circumferential wall (21) and the second inclined wall (222) is formed on the inner circumferential wall (22).

4. A clutch mechanism (100) as claimed in claim 3, wherein the inner circumferential wall (22) has a plurality of first truncated conical recesses (220) and the outer circumferential wall (21) has a plurality of second truncated conical recesses (210), each first truncated conical recess (220) having a wall which serves as the first inclined wall (222) and each second truncated conical recess (210) having a wall which serves as the second inclined wall (212).

5. A clutch mechanism (100) as claimed in claim 4, wherein each first and second truncated conical recess (210,220) terminates in a narrow receiving bore (211,221).

6. A clutch mechanism (100) as claimed in claim 5, wherein in each narrow receiving bore (211,221) is disposed a loaded elastic member (41,51).

7. A clutch mechanism (100) as claimed in any of claims 1 to 6, wherein the annular main body (2) has an axial projection (26) formed on an end face which is cooperable with a corresponding recess on an eccentric mechanism.

8. A clutch mechanism (100) as claimed in any of claims 1 to 7, wherein the annular main body (2) includes a base (2a) having at least one first securement member (231) and a cover (2b) having at least one second securement member (25) adapted to mate with the first securement member (231).

9. A clutch mechanism (100) as claimed in any preceding claim, wherein the eccentric shaft (3) has a longitudinal bore (32) for securely mounting the eccentric shaft (3) radially on the principle drive shaft.

10. A clutch mechanism (100) as claimed in claim 1, wherein the annular main body (2) has an inner circumferential wall (22) and an outer circumferential wall (21), wherein the eccentric shaft (3) has an outer wall (31) and a longitudinal bore (32) with a central axis A, wherein the central axis of the outer wall (31) and the inner circumferential wall (22) is Q and the central axis of the outer circumferential wall (21) and the outer race (1) is P, wherein the central axes A, P and Q are eccentric.

11. A clutch mechanism (100) as claimed in claim 1, wherein the annular main body (2) has an inner circumferential wall (22) having a plurality of first truncated conical recesses (220) and an outer circumferential wall (21) having a plurality of second truncated conical recesses (210), wherein in each first truncated conical recess (220) is seated the second connecting member (52) and in each second truncated conical recess (210) is seated the first connecting member (42), wherein each of the first connecting member (42) and second connecting member (52) is an elastic element connected to a roller whereby the elastic element urges the roller outwardly.

12. A clutch mechanism (100) as claimed in claim 11, wherein when in use the principle drive shaft rotates, the rollers (52) in the inner circumferential wall (22) securely engage the principle drive shaft.

13. A clutch mechanism (100) as claimed in claim 12, wherein when in use the principle drive shaft rotates, the rollers (42) in the outer circumferential wall (21) disengage the outer race (1).

14. A clutch mechanism (100) as claimed in claim 11, wherein when in use the principle drive shaft is locked, the rollers (42) in the outer circumferential wall (21) engage the outer race (1).

15. A clutch mechanism (100) as claimed in claim 14, wherein when in use the principle drive shaft is locked, the central axis P rotates around the central axis Q whereby to adjust the eccentric stroke P relative to A.

16. A power tool comprising:
a housing;
a rotary motor in the housing
a principle drive shaft driveable by the motor; and
a clutch mechanism as defined in any preceding claim.
